# EUROPEAN PATENT SPECIFICATION

(11) **EP 4 350 275 B1**
(45) Date of publication and mention of the grant of the patent: **16.09.2026**
(21) Application number: 22810600.1
(22) Date of filing: 25.05.2022
(51) Int. Cl.: F28F 9/26, F28F 9/02

(54) **CONNECTOR AND HEAT EXCHANGER HAVING SAME**
VERBINDER UND WÄRMETAUSCHER DAMIT
CONNECTEUR ET ÉCHANGEUR DE CHALEUR PRÉSENTANT CE DERNIER

(30) Priority: 27.05.2021 CN 202121168233 U
(43) Date of publication of application: 10.04.2024
(73) Proprietor: Sanhua (Hangzhou) Micro Channel Heat Exchanger Co., Ltd., Hangzhou, Zhejiang 310018 (CN)
(72) Inventor: SHI, Zhihao, Hangzhou, Zhejiang 310018 (CN); GAO, Qiang, Hangzhou, Zhejiang 310018 (CN); HUANG, Xujiao, Hangzhou, Zhejiang 310018 (CN); ZHONG, Xiaoming, Hangzhou, Zhejiang 310018 (CN)
(74) Representative: advotec.
(86) International application number: PCT/CN2022/095085
(87) International publication number: WO 2022/247876

(56) References cited:
- WO-A1-2016/128322
- CN-A- 112 164 945
- CN-U- 201 637 328
- CN-U- 201 892 475
- CN-U- 215 766 687
- JP-A- 2001 355 991
- JP-A- H10 253 288
- JP-B2- 4 588 933
- US-A- 4 026 456
- US-A1- 2016 049 705
- US-A1- 2017 016 685
- US-B1- 6 899 169

## Description

### FIELD

The present application relates to the field of heat exchange technologies, and in particular to a connector and a heat exchanger having the same.

### BACKGROUND

Microchannel heat exchangers have the characteristics of high refrigeration efficiency and small volume, and their applications are developing rapidly. In some cases, it is necessary to install connectors at a collecting tube of the microchannel heat exchangers. Connectors, such as adapter seats, are often used in heat exchangers to connect the collecting tube with inlet and outlet tubes of the heat exchangers, so as to increase the strength of the joint parts and facilitate the connection to inlet and outlet tubes. Generally, the adapter seats are formed by machining. Compared to the collecting tube of the heat exchangers, the material of the adapter seats is thicker, which is not conducive to the welding connection between the collecting tube of heat exchanger and the adapter seats, and the joint parts are not easy to position.

JP 4588933 B2 discloses a connection structure for fixing a resin pipe on a metallic tank of a heat exchanger via a connection collar having a means for preventing rotation of the resin pipe with a simple structure and preventing formation of parting lines of a die on an O-ring engaging part when forming the resin pipe. A locking part 13 formed by cutout parts is formed on a tip of the resin pipe 4, and an engaging part 7 formed by a claw part is fixed on a first stepped part 6 set on a tip of a connection cup 2. There is no annular groove formed on outer periphery of the tip of the resin pipe 4, and an outer flange part 3 of the resin pipe 4 is seated on a second stepped part 8 of the connection cup 2.

CN 201637328 U relates to the pipe joint technology, in particular to an installation joint for a microchannel condenser, which solves the problems that the insertion depth of the inlet and outlet pipes in a microchannel condenser core cavity is much to prevent the solder from flowing into the microchannel condenser core cavity, and the weak welding strength, vibration with the compressor and small welding area among the inlet and outlet pipes and the microchannel condenser core cause the welding joint to leak or crack, and the like. The installation joint for the microchannel condenser is characterized in that the connection parts of the inlet and outlet pipes and a second collecting pipe in the microchannel condenser are provided with installation joints; one end of each installation joint is provided with a circular arc surface; the center of the circular arc surface is provided with a boss column along with the axial direction of a tube socket; the installation joint is provided with a through hole in axis direction; and one end of the through hole is provided with a step round hole.

### SUMMARY

The invention is set out in the appended set of claims.

Embodiments of the present application provide a connector, which is beneficial to improving the strength of the connector and is convenient for positioning and connecting when in use.

The connector according to embodiments of the present application includes a tubular portion, a flange portion and a first protruding portion. The tubular portion includes a first through hole and a first wall. The first wall is arranged around the first through hole, the first wall has a thickness in a radial direction of the first through hole, and the first wall includes a first end face including a first opening. The flange portion is located at an end of the tubular portion in an axial direction of the tubular portion, includes a first side face arranged around the first wall, and further includes a second end face and a third end face which are arranged along the axial direction of the tubular portion. The second end face and the first wall intersect at a first side edge, the second end face and the first side face intersect at a second side edge, and a perimeter of the first side edge is smaller than a perimeter of the second side edge. The third end face and the first wall intersect at a third side edge, the third end face and the first side face intersect at a fourth side edge, a perimeter of the third side edge is smaller than a perimeter of the fourth side edge. The third end face includes a second hole, and the first through hole communicates the first opening with the second hole along the axial direction of the tubular portion. The first protruding portion is connected with the third end face and the first wall, and located outside the first through hole in the axial direction of the tubular portion. A plurality of first protruding portions are provided and arranged along a circumferential direction of the first through hole. The first protruding portion has a thickness in the radial direction of the first through hole, and a maximum thickness of the first protruding portion is smaller than a minimum thickness of the first wall.

According to embodiments of the present application, the strength of the connector is improved, and the connector has the characteristics of convenient positioning and installation.

The connector according to embodiments of the present application includes a tubular portion, a flange portion and a circular ring portion. The tubular portion includes a first through hole and a first wall. The first wall is arranged around the first through hole, the first wall has a thickness in a radial direction of the first through hole, and the first wall includes a first end face including a first opening. The flange portion is located at an end of the tubular portion in the axial direction of the tubular portion, includes a first side face arranged around the first wall, and further includes a second end face and a third end face which are arranged along the axial direction of the tubular portion. The second end face and the first wall intersect at a first side edge, the second end face and the first side face intersect at a second side edge, and a perimeter of the first side edge is smaller than a perimeter of the second side edge. The third end face and the first wall intersect at a third side edge, the third end face and the first side face intersect at a fourth side edge, and a perimeter of the third side edge is smaller than a perimeter of the fourth side edge. The third end face includes a second hole, and the first through hole communicates the first opening with the second hole along the axial direction of the tubular portion. The circular ring portion includes a circular ring wall connected with the third end face and the first wall. The circular ring portion is located outside the first through hole in the axial direction of the tubular portion. The circular ring portion includes a second through hole penetrating through the circular ring wall in the axial direction of the tubular portion, and the second through hole is communicated and concentrically arranged with the first through hole. The circular ring portion has a thickness in the radial direction of the first through hole, and a maximum thickness of the circular ring portion is smaller than a minimum thickness of the first wall.

The connector according to embodiments of the present application has the characteristics of stable structure, strong reliability and little influence on the flow of fluid in the collecting tube.

In some embodiments, the circular ring wall includes a second protruding portion located at an end of the circular ring wall away from the flange portion, and a plurality of second protruding portions are provided and arranged along a circumferential direction of the first through hole.

In some embodiments, a hydraulic diameter of the second through hole is smaller than a hydraulic diameter of the first opening.

In some embodiments, at least one longitudinal section of the flange portion includes a sector ring face, the longitudinal section of the flange portion is parallel to the axial direction of the tubular portion, the sector ring face includes at least two circular arcs, and the two circular arcs protrude towards the first end face in the axial direction of the tubular portion.

In the embodiment of the present invention, a plane perpendicular to an axis direction is defined as a first plane, a projection of the flange portion on the first plane is ellipse or nearly elliptical, and a thickness of the first wall is T, and a length of a short axis of the ellipse is not less than a sum of 4T and a diameter of the first through hole.

In some embodiments, a length of a long axis of the ellipse is more than twice the diameter of the first through hole.

In some embodiments, the first wall includes a step portion located in the first through hole, the step portion protrudes from the first wall along the radial direction of the first through hole and extends along an axis direction of the first through hole, and a diameter of the first through hole at the step portion is smaller than a diameter of the first opening.

The heat exchanger according to embodiments of the present application includes a connector and a collecting tube. The connector is a connector of the above embodiments, the first protruding portion or the circular ring portion of the connector is inserted into the collecting tube, and the connector is communicated with the collecting tube.

The heat exchanger according to embodiments of the present application has the characteristics of simple installation, uniform heat exchange and long service life.

In some embodiments, the heat exchanger is a microchannel heat exchanger, the first protruding portion or the circular ring portion of the connector has a flared portion, and the flared portion is located in the collecting tube.

### BRIEF DESCRIPTION OF THE DRAWINGS

Fig. 1 is a front view of a connector according to an embodiment of the present application.
Fig. 2 is a side view of the connector in Fig. 1.
Fig. 3 is a schematic structural view of the connector in Fig. 1.
Fig. 4 is a front view of a connector according to another embodiment of the present application.
Fig. 5 is a schematic structural view of the connector in Fig. 4.
Fig. 6 is a schematic structural view of a connector according to still another embodiment of the present application.
Fig. 7 is a schematic structural view of a connector according to yet another embodiment of the present application.

### Reference numerals:

tubular portion 1, first through hole 11, first wall 12, first end face 121, first opening 1211, step portion 122, flange portion 2, first side face 21, second end face 22, third end face 23, second hole 231, first protruding portion 3, circular ring portion 4, circular ring wall 41, second protruding portion 411, second through hole 42, first side edge 51, second side edge 52, third side edge 53, fourth side edge 54, connector 100, collecting tube 200.

### DETAILED DESCRIPTION

Hereinafter, embodiments of the present application will be described in detail and examples of the embodiments are illustrated in the accompanying drawings. The embodiments described below by referring to the accompanying drawings are illustrative and intended to explain the present application, but not to be construed as limitations of the present application.

In the related art, in order to connect inlet and outlet tubes with a collecting tube of heat exchangers, an adapter seat is designed to have an upper part and a lower part, in which the upper part is small and the lower part is large. A circular tube of the upper part is welded with the inlet and outlet tubes, and a circular tube of the lower part is inserted into a hole of the collecting tube. A wall thickness of the collecting tube is generally 1mm-3mm, which easily leads to insufficient welding length of the adapter seat and the collecting tube, and is easy to cause the welding position of the adapter seat and the collecting tube to crack due to insufficient strength in long-term use.

In order to prevent the welding position between the adapter seat and the collecting tube from cracking, some related technologies propose to add a tile-like component to form an assembly with the adapter seat. However, the tile and the adapter seat are not integrally formed, and only the overlapping area of the joint part between the tile and the adapter seat can be increased, which effectively increases the welding strength. On the other hand, the part of the adapter seat inserted into the collecting tube is too long, which hinders the refrigerant from flowing into the collecting tube, thus affecting the heat exchange performance.

In other related technologies, the tile and the adapter seat are formed into one piece, so that the overlapping area between the adapter seat and the collecting tube becomes the contact area between the tile and the collecting tube, and the welding strength is improved by increasing the size of the tile. However, in this solution, prior to the welding, it cannot be fixed with collecting tube by riveting and must be fixed with collecting tube by spot welding, which increases the production process.

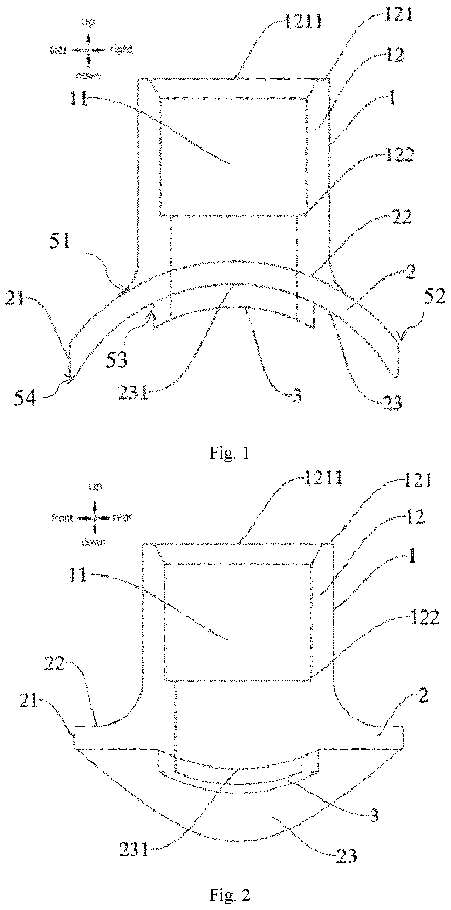

Hereinafter, a connector according to embodiments of the present application will be described with reference to Figs. 1-7.

As shown in Figs. 1-3, a connector 100 according to embodiments of the present application includes a tubular portion 1, a flange portion 2 and a first protruding portion 3.

The tubular portion 1 includes a first through hole 11 and a first wall 12, and the first wall 12 is arranged around the first through hole 11. The firs wall 12 has a thickness in a radial direction of the first through hole 11, and includes a first end face 121 including a first opening 1211.

As shown in Figs. 1-3, the first through hole 11 is arranged in an up-down direction, and a first wall 12 is arranged around a center line of the first through hole 11. The first wall 12 has a certain thickness in the radial direction of the first through hole 11 (a left-right direction in Fig. 1), and a thickness of the first wall 12 at the same height in the up-down direction is the same. An upper end face of the first wall 12 is the first end face 121, and an opening in the upper end face is the first opening 1211.

The flange portion 2 is located at an end of the tubular portion 1 in an axial direction of the tubular portion 1. The flange portion 2 includes a first side face 21, and the first side face 21 is arranged around the first wall 12. The flange portion 2 also includes a second end face 22 and a third end face 23 which are arranged along the axial direction of the tubular portion 1. The second end face 22 and the first wall 12 intersect at a first side edge 51, the second end face 22 and the first side face 21 intersect at a second side edge 52, and a perimeter of the first side edge 51 is smaller than a perimeter of the second side edge 52. The third end face 23 and the first wall 12 intersect at a third side edge 53, the third end face 23 and the first side face 21 intersect at a fourth side edge 54, and a perimeter of the third side edge 53 is smaller than a perimeter of the fourth side edge 54. The third end face 23 includes the second hole 231, and the first through hole 11 communicates the first opening 1211 with the second hole 231 along the axial direction of the tubular portion 1.

As shown in Figs. 1-3, a lower end of the tubular portion 1 is provided with the flange portion 2, and a peripheral face of the flange portion 2 is the first side face 21. The first side face 21 is arranged around the center line of the first through hole 11, and the first side face 21 is parallel to the peripheral face of the first wall 12 in the left-right direction. An upper surface of the flange portion 2 is the second end face 22, and the second end face 22 intersects with the first wall 12 and the first side face 21 in the left-right direction. The second end face 22 intersects with the first wall 12 to form the first side edge 51, and the second end face 22 intersects with the first side face 21 to form the second side edge 52. The first side face edge and the second side face edge are opposite in the left-right direction, and the second side edge 52 is located outside the first side edge 51, that is, the perimeter of the first side edge 51 is smaller than the perimeter of the second side edge 52. A lower surface of the flange portion 2 is the third end face 23, and the third end face 23 intersects with the first wall 12 and the first side face 21 in the left-right direction. The third end face 23 intersects with the first wall 12 to form the third side edge 53, and the third end face 23 intersects with the first side face 21 to form the fourth side edge 54. The third side edge 53 and the fourth side edge 54 are opposite in the left-right direction, and the fourth side edge 54 is located outside the third side edge 53, that is, the perimeter of the third side edge 53 is smaller than the perimeter of the fourth side edge 54. A center of the third end face 23 is provided with the second hole 231, and the first through hole 11 runs up and down along the tubular portion 1 to communicate the first opening 1211 in the upper end of the first wall 12 with the second hole 231 in the third end face 23.

The first protruding portion 3 is connected with the third end face 23, and connected with the first wall 12. The first protruding portion 3 is located outside the first through hole 11 in the axial direction of the tubular portion 1. A plurality of first protruding portions 3 are provided and arranged along the circumferential direction of the first through hole 11. The first protruding portion 3 has a thickness in the radial direction of the first through hole 11, and a maximum thickness of the first protruding portion 3 is less than a minimum thickness of the first wall 12.

As shown in Figs. 1-3, the first protruding portion 3 is arranged below the flange portion 2, an upper end of the first protruding portion 3 is connected with the first wall 12, an outer peripheral face of the first protruding portion 3 is connected with the third end face 23, and a plurality of first protruding portions 3 are arranged at intervals around the center of the first through hole 11. The plurality of first protruding portions 3 can further reduce local stress concentration and improve reliability. The first protruding portion 3 has a certain thickness in the radial direction of the first through hole 11 (the left-right direction in Fig. 1), but the maximum thickness of the first protruding portions 3 is smaller than the minimum thickness of the first wall 12, to increase the processing stress on the overall structure of the connector 100, reduce the size of the opening in the collecting tube 200 during assembly, facilitate improvement of the pressure resistance of a core, and enhance the reliability of the connector 100.

The connector 100 according to embodiments of the present application has the characteristics of convenient positioning and installation.

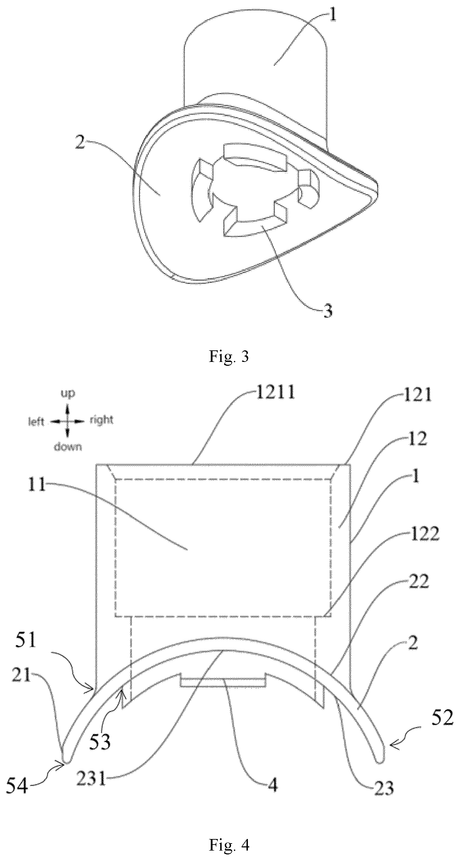

As illustrated in Figs. 4-6, a connector 100 according to embodiments of the present application includes a tubular portion 1, a flange portion 2 and a circular ring portion 4.

The tubular portion 1 includes a first through hole 11 and a first wall 12, and the first wall 12 is arranged around the first through hole 11. The first wall 12 has a thickness in the radial direction of the first through hole 11, and includes a first end face 121 including a first opening 1211.

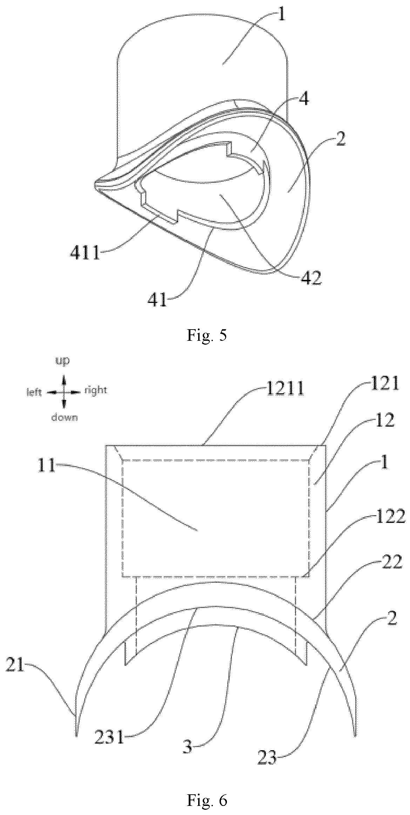

As shown in Figs. 4 and 5, the first through hole 11 is arranged in the up-down direction, and a first wall 12 is arranged around the center line of the first through hole 11. The first wall 12 has a certain thickness, and the thickness of the first wall 12 along the radial direction (the left-right direction in Fig. 1) of the first through hole 11 is the same at the same height in the up-down direction. The upper end face of the first wall 12 is the first end face 121, and the opening in the upper end face is the first opening 1211.

The flange portion 2 is located at an end of the tubular portion 1 in the axial direction of the tubular portion 1. The flange portion 2 includes a first side face 21, and the first side face 21 is arranged around the first wall 12. The flange portion 2 also includes a second end face 22 and a third end face 23 which are arranged along the axial direction of the tubular portion 1. The second end face 22 and the first wall 12 intersect at a first side edge 51, the second end face 22 and the first side face 21 intersect at a second side edge 52, and the perimeter of the first side edge 51 is smaller than the perimeter of the second side edge 52. The third end face 23 and the first wall 12 intersect at the third side edge 53, the third end face 23 and the first side face 21 intersect at the fourth side edge 54, and the perimeter of the third side edge 53 is smaller than the perimeter of the fourth side edge 54. The third end face 23 includes the second hole 231, and the first through hole 11 communicates the first opening 1211 with the second hole 231 along the axial direction of the tubular portion 1.

As shown in Figs. 4 and 5, the lower end of the tubular portion 1 is provided with the flange portion 2, and the peripheral face of the flange portion 2 is the first side face 21. The first side face 21 is arranged around the center line of the first through hole 11, and the first side face 21 is parallel to the peripheral face of the first wall 12 in the left-right direction. The upper surface of the flange portion 2 is the second end face 22, and the second end face 22 intersects with the first wall 12 and the first side face 21 in the left-right direction. The second end face 22 intersects with the first wall 12 to form the first side edge 51, and the second end face 22 intersects with the first side face 21 to form the second side edge 52. The first side edge 51 and the second side edge 52 are opposite in the left-right direction, and the second side edge 52 is located outside the first side edge 51, that is, the perimeter of the first side edge 51 is smaller than the perimeter of the second side edge 52. The lower surface of the flange portion 2 is the third end face 23, and the third end face 23 intersects with the first wall 12 and the first side face 21 in the left-right direction. The third end face 23 intersects with the first wall 12 to form the third side edge 53, and the third end face 23 intersects with the first side face 21 to form the fourth side edge 54. The third side edge 53 and the fourth side edge 54 are opposite in the left-right direction, and the fourth side edge 54 is located outside the third side edge 53, that is, the perimeter of the third side edge 53 is smaller than the perimeter of the fourth side edge 54. The center of the third end face 23 is provided with the second hole 231, and the first through hole 11 runs up and down along the tubular portion 1 to communicate the first opening 1211 in the upper end of the first wall 12 with the second hole 231 in the third end face 23.

The circular ring portion 4 includes a circular ring wall 41, and the circular ring wall 41 is connected with the third end face 23 and the first wall 12. The circular ring portion 4 is located outside the first through hole 11 in the axial direction of the tubular portion 1, and the circular ring portion 4 includes a second through hole 42. The second through hole 42 penetrates through the circular ring wall 41 in the axial direction of the tubular portion 1, and the second through hole 42 is communicated and concentrically arranged with the first through hole 11. The circular ring portion 4 has a thickness in the radial direction of the first through hole 11, and a maximum thickness of the circular ring portion 4 is smaller than a minimum thickness of the first wall 12.

As shown in Fig. 4 and Fig. 5, the circular ring portion 4 is arranged below the flange portion 2, the upper end of the circular ring wall 41 is connected with the first wall 12, and the circular ring wall 41 is connected with the third end face 23. The center of the circular ring portion 4 is provided with the second through hole 42, the second through hole 42 penetrates through the circular ring wall 41 in the up-down direction. The upper end of the second through hole 42 is communicated with the lower end of the first through hole 11, and the second through hole 42 is concentrically arranged with the first through hole 11. The circular ring portion 4 has a thickness in the radial direction of the first through hole 11 (the left-right direction in Fig. 1), but the maximum thickness of the circular ring portion 4 is smaller than the minimum thickness of the first wall 12, to increase the processing stress on the overall structure of the connector 100, reduce the size of the opening on the collecting tube 200 during assembly, and facilitate improvement of the pressure resistance of the core. By providing the circular ring portion 4, the contact area with the collecting tube 200 when welding can be increased, and the reliability of the connector 100 can be enhanced.

The connector 100 according to embodiments of the present application has the characteristics of stable structure, strong reliability and little influence on the flow of fluid in the collecting tube 200.

In some embodiments, the first protruding portion 3 and the circular ring portion 4 can be obtained by extruding the material of the tubular portion. In some embodiments, the first protruding portion 3 is formed by extruding the material of an inner wall of the tubular portion, which reduces the stress concentration on the connector compared with machining work, and is beneficial to improving the structural strength and saving materials.

In some embodiments, the circular ring wall 41 includes a second protruding portion 411, and the second protruding portion is located at an end of the circular ring wall 41 away from the flange portion 2. A plurality of second protruding portions 411 are provided and arranged along the circumferential direction of the first through hole 11.

As shown in Figs. 4 and 5, the lower end of the circular ring wall 41 is also provided with the plurality of second protruding portions 411, and the plurality of second protruding portions are arranged at even intervals around the center of the first through hole 11. The second protruding portions 411 can expand outward along the radial direction of the first through hole 11 to reduce the influence on the flow of fluid in the collecting tube 200.

In some embodiments, a hydraulic diameter of the second through hole 42 is smaller than a hydraulic diameter of the first opening 1211.

The second through hole 42 communicates with the collecting tube 200, and the hydraulic diameter of the first opening 1211 is larger than the hydraulic diameter of the second through hole 42, which can reduce the pressure at the second through hole 42, improve the strength of the joint part, reduce the obstruction of the connector 100 when the refrigerant enters the collecting tube 200, and reduce the influence on the heat exchange effect.

In some embodiments, at least one longitudinal section of the flange portion 2 includes a sector ring face, the longitudinal section is parallel to the axial direction of the tubular portion 1, and the sector ring face at least includes two circular arcs. The two circular arcs protrude towards the first end face 121 in the axial direction of the tubular portion 1.

As shown in Fig. 1 and Fig. 4, one or more longitudinal sections of the flange portion 2 along the up-down direction are the sector ring face, and an upper side and a lower side of the sector ring face are circular arcs which protrude upwards, and the height of the sector ring face in the up-down direction is consistent. As shown in Fig. 6, one or more longitudinal sections of the flange portion 2 in the up-and-down direction are a crescent face, and an upper side and a lower side of the crescent face are circular arcs which protrude upward, and the height of the crescent face is inconsistent in the up-down direction. The height of the crescent face gradually increases in a direction from the positions far away from the center line of the tubular portion 1 to the center line of the tubular portion 1, so that the structure of the connector 100 is more stable, the stress is mainly concentrated on the edge of the flange portion 2, and the connector 100 is not easy to fall off during use. Moreover, the less material is used, and it is easier to perform mold stamping forming.

In some embodiments, the flange portion 2 is formed by extruding the material of the tubular portion, and in other embodiments, the protruding portion or the circular ring portion and the flange portion are formed by integrally extruding the material of the tubular portion. Compared with the machined connector, such connector saves processing materials, and is integrally formed, which improves the overall strength and reduces the stress concentration distribution on the connector.

In the embodiment of the present invention, a plane perpendicular to an axis direction (i.e., the axial direction of the tubular portion) is defined as a first plane, a projection of the flange portion 2 on the first plane is ellipse or nearly elliptical, a thickness of the first wall 12 is T, and a length of a short axis of the ellipse is not less than a sum of 4T and a diameter of the first through hole 11.

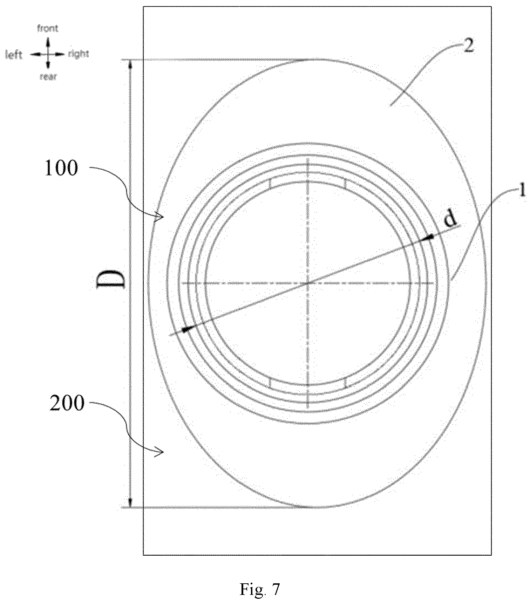

As shown in Fig. 7, the flange portion 2 and the collecting tube 200 are connected together by welding. When the first plane is horizontal, the projection of the flange portion 2 on the horizontal plane is ellipse or nearly elliptical, which can make the distribution of solder on the contact face between the flange portion 2 and the collecting tube 200 more uniform and improve the connection strength between the flange portion 2 and the collecting tube 200. When the thickness of the first wall 12 is T, the length of the short axis of the ellipse is greater than or equal to the sum of 4T and the diameter of the first through hole 11, which, at this time, can ensure that the overall heating of the connector 100 is easy during high-temperature welding, the welding quality is good, and the welding qualification rate is high.

In some embodiments, a length of a long axis of the ellipse is greater than twice the diameter of the first through hole 11. As shown in Fig. 7, the length of the long axis of the projection of the flange portion 2 on the horizontal plane is D, the diameter of the first through hole 11 is d, and D is greater than 2d, to improve the strength of the joint part between the flange portion 2 and the collecting tube 200 and enhance the use reliability of the connector 100.

In some embodiments, the first wall 12 includes a step portion 122 located in the first through hole 11, the step portion 122 protrudes from the first wall 12 in the radial direction of the first through hole 11 and extends in the axial direction of the first through hole 11, and the diameter of the first through hole 11 at the step portion 122 is smaller than a diameter of the first opening 1211.

As shown in Figs. 1-6, the first wall 12 is provided with the step portion 122, and the step portion 122 extends downward to a second opening, and an external tube is inserted into the tubular portion 1. A diameter of a downward portion of the step portion 122 is smaller than the diameter of the first opening 1211, so that an end of the external tube abuts on the step portion 122, which is easy to install and improves the working efficiency.

The heat exchanger according to embodiments of the present application includes a connector 100 and a collecting tube 200. The connector 100 is a connector 100 described above, the first protruding portion 3 or the circular ring portion 4 of the connector 100 is inserted into the collecting tube 200, and the connector 100 is communicated with the collecting tube 200.

The heat exchanger according to embodiments of the present application has the characteristics of simple installation, uniform heat exchange and long service life.

In some embodiments, the heat exchanger is a microchannel heat exchanger, and the first protruding portion 3 or the circular ring portion 4 of the connector 100 has a flared portion (not shown in the figures), and the flared portion is located in the collecting tube 200.

As shown in Fig. 3 and Fig. 5, an equivalent diameter of a channel of the heat exchanger is 10-1000µm, and an outer side of the first protruding portion 3 or the circular ring portion 4 of the connector 100 is provided with the flared portion, and the flared portion can be flared outward after being inserted into the collecting tube 200, so that the connection strength between the flange portion 2 and the collecting tube 200 at the same time of installation and positioning can be improved and the service life of the heat exchanger can be prolonged.

In the description of the present disclosure, it should be understood that the orientation or positional relationship indicated by the terms "center", "longitudinal", "transverse", "length", "width", "thickness", "up", "down", "front", "rear", "left", "right", "vertical", "horizontal", "top", "bottom", "inside", "outside", "clockwise", "counterclockwise", "axial", "radial" and "circumferential" and the like, is based on the orientation or positional relationship shown in the attached drawings, which is only for the convenience of describing the present disclosure and simplifying the description, and does not indicate or imply that the referred device or element must have a specific orientation, and be constructed and operated in a specific orientation, so it cannot be understood as a limitation of the present disclosure.

In addition, the terms "first" and "second" are only used for purpose of description, and cannot be understood as indicating or implying relative importance or implicitly indicating the number of indicated technical features. Therefore, the feature defined as "first" or "second" may explicitly or implicitly include at least one such feature. In the description of the present disclosure, "a plurality of" means at least two, such as two, three, etc., unless otherwise specifically defined.

In the present disclosure, unless otherwise expressly defined, terms such as "install", "interconnect", "connect", "fix" shall be understood broadly, and may be, for example, fixed connections, detachable connections, or integral connections; may also be mechanical or electrical connections or intercommunication; may also be direct connections or indirect connections via intervening media; may also be inner communications or interactions of two elements. For those skilled in the art, the specific meaning of the above terms in the present disclosure can be understood according to the specific situations.

In the present disclosure, unless otherwise expressly defined and specified, a structure in which a first feature is "on" or "below" a second feature may include an embodiment in which the first feature is in direct contact with the second feature, or may further include an embodiment in which the first feature and the second feature are in indirect contact through intermediate media. Furthermore, a first feature "on", "above", or "on top of" a second feature may include an embodiment in which the first feature is right or obliquely "on", "above", or "on top of" the second feature, or just means that the first feature is at a height higher than that of the second feature, while a first feature "below", "under", or "on bottom of" a second feature may include an embodiment in which the first feature is right or obliquely "below", "under", or "on bottom of" the second feature, or just means that the first feature is at a height lower than that of the second feature.

In the description of the present disclosure, terms such as "an embodiment", "some embodiments", "an example", "a specific example" or "some examples" means that a particular feature, structure, material, or characteristic described in connection with the embodiment or example is included in at least one embodiment or example of the present disclosure. Thus, the appearances of these terms in various places throughout this specification are not necessarily referring to the same embodiment or example of the present disclosure. Furthermore, the particular features, structures, materials, or characteristics may be combined in any suitable manner in one or more embodiments or examples. In addition, without contradiction, those skilled in the art may combine and unite different embodiments or examples or features of the different embodiments or examples described in this specification.

## Claims

1. A connector (100), comprising:
a tubular portion (1) comprising a first through hole (11) and a first wall (12), the first wall (12) being arranged around the first through hole (11), the first wall (12) having a thickness in a radial direction of the first through hole (11), the first wall (12) comprising a first end face (121), the first end face (121) comprising a first opening (1211);
a flange portion (2) located at an end of the tubular portion (1) in an axial direction of the tubular portion (1) and comprising a first side face (21), the first side face (21) being arranged around the first wall (12), the flange portion (2) further comprising a second end face (22) and a third end face (23) which are arranged along the axial direction of the tubular portion (1), wherein the second end face (22) and the first wall (12) intersect at a first side edge (51), the second end face (22) and the first side face (21) intersect at a second side edge (52), and a perimeter of the first side edge (51) is smaller than a perimeter of the second side edge (52),
wherein the third end face (23) and the first wall (12) intersect at a third side edge (53), the third end face (23) and the first side face (21) intersect at a fourth side edge (54), a perimeter of the third side edge (53) is smaller than a perimeter of the fourth side edge (54), the third end face (23) comprises a second hole (231), and the first through hole (11) communicates the first opening (1211) with the second hole (231) along the axial direction of the tubular portion (1); and
a plurality of first protruding portions (3) along a circumferential direction of the first through hole (11), each first protruding portion (3) being connected with the third end face (23) and the first wall (12) and located outside the first through hole (11) in the axial direction of the tubular portion (1), each first protruding portion (3) having a thickness in the radial direction of the first through hole (11), a maximum thickness of the plurality of first protruding portions (3) being smaller than a minimum thickness of the first wall (12),
**characterized in that** a plane perpendicular to an axial direction of the tubular portion (1) is defined as a first plane, a projection of the flange portion (2) on the first plane is ellipse or nearly elliptical, a thickness of the first wall (12) is T, and a length of a short axis of the ellipse is not less than a sum of 4T and a diameter of the first through hole (11).

2. A connector (100), comprising:
a tubular portion (1) comprising a first through hole (11) and a first wall (12), the first wall (12) being arranged around the first through hole (11), the first wall (12) having a thickness in a radial direction of the first through hole (11), the first wall (12) comprising a first end face (121), the first end face (121) comprising a first opening (1211);
a flange portion (2) is located at an end of the tubular portion (1) in an axial direction of the tubular portion (1) and comprising a first side face (21), the first side face (21) being arranged around the first wall (12), the flange portion (2) further comprising a second end face (22) and a third end face (23) which are arranged along the axial direction of the tubular portion (1), wherein the second end face (22) and the first wall (12) intersect at a first side edge (51), the second end face (22) and the first side face (21) intersect at a second side edge (52), and a perimeter of the first side edge (51) is smaller than a perimeter of the second side edge (52),
wherein the third end face (23) and the first wall (12) intersect at a third side edge (53), the third end face (23) and the first side face (21) intersect at a fourth side edge (54), a perimeter of the third side edge (53) is smaller than a perimeter of the fourth side edge (54), the third end face (23) comprises a second hole (231), and the first through hole (11) communicates the first opening (1211) with the second hole (231) along the axial direction of the tubular portion (1); and
a circular ring portion (4) comprising a circular ring wall (41) connected with the third end face (23) and the first wall (12), the circular ring portion (4) being located outside the first through hole (11) in the axial direction of the tubular portion (1), the circular ring portion (4) comprising a second through hole (42) penetrating through the circular ring wall (41) in the axial direction of the tubular portion (1), wherein the second through hole (42) is communicated and concentrically arranged with the first through hole (11), the circular ring portion (4) has a thickness in the radial direction of the first through hole (11), and a maximum thickness of the circular ring portion (4) is smaller than a minimum thickness of the first wall (12),
**characterized in that** a plane perpendicular to an axial direction of the tubular portion (1) is defined as a first plane, a projection of the flange portion (2) on the first plane is ellipse or nearly elliptical, a thickness of the first wall (12) is T, and a length of a short axis of the ellipse is not less than a sum of 4T and a diameter of the first through hole (11).

3. The connector (100) according to claim 2, wherein the circular ring wall (41) comprises a plurality of second protruding portions (411) located at an end of the circular ring wall (41) away from the flange portion (2), and arranged along a circumferential direction of the first through hole (11).

4. The connector (100) according to claim 3, wherein a hydraulic diameter of the second through hole (42) is smaller than a hydraulic diameter of the first opening (1211).

5. The connector (100) according to any one of claims 1-4, wherein at least one longitudinal section of the flange portion (2) comprises a sector ring face, the longitudinal section of the flange portion (2) is parallel to the axial direction of the tubular portion (1), the sector ring face comprises at least two circular arcs, and the two circular arcs protrude towards the first end face (121) in the axial direction of the tubular portion (1).

6. The connector (100) according to any one of claims 1-4, wherein a length of a long axis of the ellipse is more than twice the diameter of the first through hole (11).

7. The connector (100) according to any one of claims 1-6, wherein the first wall (12) comprises a step portion (122) located in the first through hole (11), the step portion (122) protrudes from the first wall (12) along the radial direction of the first through hole (11) and extends along an axis direction of the first through hole (11), and a diameter of the first through hole (11) at the step portion (122) is smaller than a diameter of the first opening (1211).

8. The connector (100) according to any one of claims 1 to 7, wherein a thickness of the first wall (12) at a same height in the axial direction of the tubular portion (1) is the same.

9. The connector (100) according to any one of claims 1 to 4, wherein at least one longitudinal section of the flange portion (2) comprises a crescent face, the longitudinal section of the flange portion (2) is parallel to the axial direction of the tubular portion (1), the crescent face comprises at least two circular arcs, and the two circular arcs protrude towards the first end face (121) in the axial direction of the tubular portion (1).

10. The connector (100) according to claim 9, wherein a height of the crescent face gradually increases in a direction from positions far away from a center line of the tubular portion (1) to the center line of the tubular portion (1).

11. The connector (100) according to any one of claims 1 to 10, wherein the plurality of first protruding portions (3) are formed by extruding a material of an inner wall of the tubular portion (1).

12. The connector (100) according to any one of claims 1 to 11, wherein the flange portion (2) is formed by extruding a material of the tubular portion (1).

13. A heat exchanger, comprising:
a connector (100) according to any one of claims 1-12.
a collecting tube (200), wherein the plurality of first protruding portions (3) or a circular ring portion (4) of the connector (100) is inserted into the collecting tube (200), and the connector (100) is communicated with the collecting tube (200).

14. The heat exchanger according to claim 13, wherein the heat exchanger is a microchannel heat exchanger, and each first protruding portion (3) or the circular ring portion (4) of the connector (100) has a flared portion, and the flared portion is located in the collecting tube (200).

## Patentansprüche

1. Verbinder (100), Folgendes umfassend:
einen rohrförmigen Abschnitt (1), der ein erstes Durchgangsloch (11) und
eine erste Wand (12) umfasst, wobei die erste Wand (12) um das erste Durchgangsloch (11) herum angeordnet ist, wobei die erste Wand (12) eine Dicke in einer radialen Richtung des ersten Durchgangslochs (11) aufweist, wobei die erste Wand (12) eine erste Stirnfläche (121) umfasst,
wobei die erste Stirnfläche (121) eine erste Öffnung (1211) umfasst;
einen Flanschabschnitt (2), der sich an einem Ende des rohrförmigen Abschnitts (1) in einer axialen Richtung des rohrförmigen Abschnitts (1) befindet und der eine erste Seitenfläche (21) umfasst, wobei die erste Seitenfläche (21) um die erste Wand (12) herum angeordnet ist, wobei der Flanschabschnitt (2) des Weiteren eine zweite Stirnfläche (22) und eine dritte Stirnfläche (23) umfasst, die entlang der axialen Richtung des rohrförmigen Abschnitts (1) angeordnet sind, wobei sich die zweite Stirnfläche (22) und die erste Wand (12) an einer ersten Seitenkante (51) schneiden, wobei sich die zweite Stirnfläche (22) und die erste Seitenfläche (21) an einer zweiten Seitenkante (52) schneiden, und wobei ein Umfang der ersten Seitenkante (51) kleiner als ein Umfang der zweiten Seitenkante (52) ist,
wobei sich die dritte Stirnfläche (23) und die erste Wand (12) an einer dritten Seitenkante (53) schneiden, wobei sich die dritte Stirnfläche (23) und die erste Seitenfläche (21) an einer vierten Seitenkante (54) schneiden, wobei ein Umfang der dritten Seitenkante (53) kleiner als ein Umfang der vierten Seitenkante (54) ist, wobei die dritte Stirnfläche (23) ein zweites Loch (231) umfasst, und wobei das erste Durchgangsloch (11) die erste Öffnung (1211) mit dem zweiten Loch (231) entlang der axialen Richtung des rohrförmigen Abschnitts (1) verbindet; und
eine Vielzahl von ersten vorspringenden Abschnitten (3) entlang einer Umfangsrichtung des ersten Durchgangslochs (11), wobei jeder erste vorspringende Abschnitt (3) mit der dritten Stirnfläche (23) und der ersten Wand (12) verbunden ist und sich in der axialen Richtung des rohrförmigen Abschnitts (1) außerhalb des ersten Durchgangslochs (11) befindet, wobei jeder erste vorspringende Abschnitt (3) eine Dicke in der radialen Richtung des ersten Durchgangslochs (11) aufweist, wobei eine maximale Dicke der Vielzahl von ersten vorspringenden Abschnitten (3) kleiner als eine minimale Dicke der ersten Wand (12) ist,
**dadurch gekennzeichnet, dass** eine Ebene, die senkrecht zu einer axialen Richtung des rohrförmigen Abschnitts (1) ist, als eine erste Ebene definiert ist, dass eine Projektion des Flanschabschnitts (2) auf der ersten Ebene eine Ellipse oder fast elliptisch ist, dass eine Dicke der ersten Wand (12) T ist, und dass eine Länge einer kurzen Achse der Ellipse nicht kleiner als eine Summe von 4T und einem Durchmesser des ersten Durchgangslochs (11) ist.

2. Verbinder (100), Folgendes umfassend:
einen rohrförmigen Abschnitt (1), der ein erstes Durchgangsloch (11) und
eine erste Wand (12) umfasst, wobei die erste Wand (12) um das erste Durchgangsloch (11) herum angeordnet ist, wobei die erste Wand (12) eine Dicke in einer radialen Richtung des ersten Durchgangslochs (11) aufweist, wobei die erste Wand (12) eine erste Stirnfläche (121) umfasst,
wobei die erste Stirnfläche (121) eine erste Öffnung (1211) umfasst;
einen Flanschabschnitt (2), der sich an einem Ende des rohrförmigen Abschnitts (1) in einer axialen Richtung des rohrförmigen Abschnitts (1) befindet und der eine erste Seitenfläche (21) umfasst, wobei die erste Seitenfläche (21) um die erste Wand (12) herum angeordnet ist, wobei der Flanschabschnitt (2) des Weiteren eine zweite Stirnfläche (22) und eine dritte Stirnfläche (23) umfasst, die entlang der axialen Richtung des rohrförmigen Abschnitts (1) angeordnet sind, wobei sich die zweite Stirnfläche (22) und die erste Wand (12) an einer ersten Seitenkante (51) schneiden, wobei sich die zweite Stirnfläche (22) und die erste Seitenfläche (21) an einer zweiten Seitenkante (52) schneiden, und wobei ein Umfang der ersten Seitenkante (51) kleiner als ein Umfang der zweiten Seitenkante (52) ist,
wobei sich die dritte Stirnfläche (23) und die erste Wand (12) an einer dritten Seitenkante (53) schneiden, wobei sich die dritte Stirnfläche (23) und die erste Seitenfläche (21) an einer vierten Seitenkante (54) schneiden, wobei ein Umfang der dritten Seitenkante (53) kleiner als ein Umfang der vierten Seitenkante (54) ist, wobei die dritte Stirnfläche (23) ein zweites Loch (231) umfasst, und wobei das erste Durchgangsloch (11) die erste Öffnung (1211) mit dem zweiten Loch (231) entlang der axialen Richtung des rohrförmigen Abschnitts (1) verbindet; und
einen kreisförmigen Ringabschnitt (4), der eine kreisförmige Ringwand (41) umfasst, die mit der dritten Stirnfläche (23) und der ersten Wand (12) verbunden ist, wobei sich der kreisförmige Ringabschnitt (4) in der axialen Richtung des rohrförmigen Abschnitts (1) außerhalb des ersten Durchgangslochs (11) befindet, wobei der kreisförmige Ringabschnitt (4) ein zweites Durchgangsloch (42) umfasst, das die kreisförmige Ringwand (41) in der axialen Richtung des rohrförmigen Abschnitts (1) durchdringt, wobei das zweite Durchgangsloch (42) mit dem ersten Durchgangsloch (11) verbunden und konzentrisch angeordnet ist, wobei der kreisförmige Ringabschnitt (4) eine Dicke in der radialen Richtung des ersten Durchgangslochs (11) aufweist, und wobei eine maximale Dicke des kreisförmigen Ringabschnitts (4) kleiner als eine minimale Dicke der ersten Wand (12) ist,
**dadurch gekennzeichnet, dass** eine Ebene, die senkrecht zu einer axialen Richtung des rohrförmigen Abschnitts (1) ist, als eine erste Ebene definiert ist, dass eine Projektion des Flanschabschnitts (2) auf der ersten Ebene eine Ellipse oder fast elliptisch ist, dass eine Dicke der ersten Wand (12) T ist, und dass eine Länge einer kurzen Achse der Ellipse nicht kleiner als eine Summe von 4T und einem Durchmesser des ersten Durchgangslochs (11) ist.

3. Verbinder (100) nach Anspruch 2, wobei die kreisförmige Ringwand (41) eine Vielzahl von zweiten vorspringenden Abschnitten (411) umfasst, die sich an einem von dem Flanschabschnitt (2) entfernten Ende der kreisförmigen Ringwand (41) befindet und die entlang einer Umfangsrichtung des ersten Durchgangslochs (11) angeordnet ist.

4. Verbinder (100) nach Anspruch 3, wobei ein hydraulischer Durchmesser des zweiten Durchgangslochs (42) kleiner als ein hydraulischer Durchmesser der ersten Öffnung (1211) ist.

5. Verbinder (100) nach einem der Ansprüche 1 bis 4, wobei mindestens ein Längsschnitt des Flanschabschnitts (2) eine Sektorringfläche umfasst, wobei der Längsschnitt des Flanschabschnitts (2) parallel zu der axialen Richtung des rohrförmigen Abschnitts (1) ist, wobei die Sektorringfläche mindestens zwei Kreisbögen umfasst, und wobei die zwei Kreisbögen in Richtung der ersten Stirnfläche (121) in der axialen Richtung des rohrförmigen Abschnitts (1) ragen.

6. Verbinder (100) nach einem der Ansprüche 1 bis 4, wobei eine Länge einer langen Achse der Ellipse mehr als zweimal der Durchmesser des ersten Durchgangslochs (11) ist.

7. Verbinder (100) nach einem der Ansprüche 1 bis 6, wobei die erste Wand (12) einen Stufenabschnitt (122) umfasst, der sich in dem ersten Durchgangsloch (11) befindet, wobei der Stufenabschnitt (122) aus der ersten Wand (12) entlang der radialen Richtung des ersten Durchgangslochs (11) ragt und sich entlang einer Achsenrichtung des ersten Durchgangslochs (11) erstreckt, und wobei ein Durchmesser des ersten Durchgangslochs (11) an dem Stufenabschnitt (122) kleiner als ein Durchmesser der ersten Öffnung (1211) ist.

8. Verbinder (100) nach einem der Ansprüche 1 bis 7, wobei eine Dicke der ersten Wand (12) auf einer selben Höhe in der axialen Richtung des rohrförmigen Abschnitts (1) gleich ist.

9. Verbinder (100) nach einem der Ansprüche 1 bis 4, wobei mindestens ein Längsschnitt des Flanschabschnitts (2) eine sichelförmige Fläche umfasst, wobei der Längsschnitt des Flanschabschnitts (2) parallel zu der axialen Richtung des rohrförmigen Abschnitts (1) ist, wobei die sichelförmige Fläche mindestens zwei Kreisbögen umfasst, und wobei die zwei Kreisbögen in Richtung der ersten Stirnfläche (121) in der axialen Richtung des rohrförmigen Abschnitts (1) ragen.

10. Verbinder (100) nach Anspruch 9, wobei sich eine Höhe der sichelförmigen Fläche in einer Richtung von Positionen, die weit von einer Mittellinie des rohrförmigen Abschnitts (1) entfernt sind, zu der Mittellinie des rohrförmigen Abschnitts (1) schrittweise erhöht.

11. Verbinder (100) nach einem der Ansprüche 1 bis 10, wobei die Vielzahl von ersten vorspringenden Abschnitten (3) durch Extrudieren eines Materials einer Innenwand des rohrförmigen Abschnitts (1) gebildet ist.

12. Verbinder (100) nach einem der Ansprüche 1 bis 11, wobei der Flanschabschnitt (2) durch Extrudieren eines Materials des rohrförmigen Abschnitts (1) gebildet ist.

13. Wärmetauscher, umfassend:
einen Verbinder (100) nach einem der Ansprüche 1 bis 12,
ein Sammelrohr (200), wobei die Vielzahl von ersten vorspringenden Abschnitten (3) oder ein kreisförmiger Ringabschnitt (4) des Verbinders (100) in das Sammelrohr (200) eingesetzt ist, und wobei der Verbinder (100) mit dem Sammelrohr (200) verbunden ist.

14. Wärmetauscher nach Anspruch 13, wobei der Wärmetauscher ein Mikrokanal-Wärmetauscher ist, und wobei jeder erste vorspringende Abschnitt (3) oder der kreisförmige Ringabschnitt (4) des Verbinders (100) einen aufgeweiteten Abschnitt aufweist, und wobei sich der aufgeweitete Abschnitt in dem Sammelrohr (200) befindet.

## Revendications

1. Connecteur (100), comprenant :
une partie tubulaire (1) comprenant un premier trou traversant (11) et une première paroi (12), la première paroi (12) étant disposée autour du premier trou traversant (11), la première paroi (12) ayant une épaisseur dans une direction radiale du premier trou traversant (11), la première paroi (12) comprenant une première face d'extrémité (121), la première face d'extrémité (121) comprenant une première ouverture (1211) :
une partie de bride (2) qui se trouve d'une extrémité de la partie tubulaire (1) dans une direction axiale de la partie tubulaire (1) et qui comprend une première face latérale (21), la première face latérale (21) étant disposée autour de la première paroi (12), la partie de bride (2) comprenant en outre une deuxième face d'extrémité (2) et une troisième face d'extrémité (23) qui sont disposées le long de la direction axiale de la partie tubulaire (1), la deuxième face d'extrémité (22) et la première paroi (12) se coupant à un premier bord latéral (51), la deuxième face d'extrémité (22) et la première face latérale (21) se coupant à un deuxième bord latéral (52), et un périmètre du premier bord latéral (51) étant inférieur à un périmètre du deuxième bord latéral (52),
la troisième face d'extrémité (23) et la première paroi (12) se coupant à un troisième bord latéral (53), la troisième face d'extrémité (23) et la première face latérale (21) se coupant à un quatrième bord latéral (54), un périmètre du troisième bord latéral (53) étant inférieur à un périmètre du quatrième bord latéral (54), la troisième face d'extrémité (23) comprenant un deuxième trou (231), et le premier trou traversant (11) reliant la première ouverture (1211) au deuxième trou (231) le long de la direction axiale de la partie tubulaire (1) ; et
une pluralité de premières parties saillantes (3) le long d'une direction circonférentielle du premier trou traversant (11), chaque première partie saillante (3) étant reliée à la troisième face d'extrémité (23) et la première paroi (12) et se trouvant à l'extérieur du premier trou traversant (11) dans la direction axiale de la partie tubulaire (1), chaque première partie saillante (3) ayant une épaisseur dans la direction radiale du premier trou traversant (11), une épaisseur maximale de la pluralité de premières parties saillantes (3) étant inférieure à une épaisseur minimale de la première paroi (12),
**caractérisé en ce qu'**un plan perpendiculaire à une direction axiale de la partie tubulaire (1) est défini comme premier plan, **en ce qu'**une projection de la partie de bride (2) sur le premier plan est une ellipse ou presque elliptique, **en ce qu'**une épaisseur de la première paroi (12) est T, et **en ce qu'**une longueur d'un axe court de l'ellipse n'est pas inférieure à une somme de 4T et d'un diamètre du premier trou traversant (11).

2. Connecteur (100), comprenant :
une partie tubulaire (1) comprenant un premier trou traversant (11) et une première paroi (12), la première paroi (12) étant disposée autour du premier trou traversant (11), la première paroi (12) ayant une épaisseur dans une direction radiale du premier trou traversant (11), la première paroi (12) comprenant une première face d'extrémité (121), la première face d'extrémité (121) comprenant une première ouverture (1211) :
une partie de bride (2) qui se trouve d'une extrémité de la partie tubulaire (1) dans une direction axiale de la partie tubulaire (1) et qui comprend une première face latérale (21), la première face latérale (21) étant disposée autour de la première paroi (12), la partie de bride (2) comprenant en outre une deuxième face d'extrémité (2) et une troisième face d'extrémité (23) qui sont disposées le long de la direction axiale de la partie tubulaire (1), la deuxième face d'extrémité (22) et la première paroi (12) se coupant à un premier bord latéral (51), la deuxième face d'extrémité (22) et la première face latérale (21) se coupant à un deuxième bord latéral (52), et un périmètre du premier bord latéral (51) étant inférieur à un périmètre du deuxième bord latéral (52),
la troisième face d'extrémité (23) et la première paroi (12) se coupant à un troisième bord latéral (53), la troisième face d'extrémité (23) et la première face latérale (21) se coupant à un quatrième bord latéral (54), un périmètre du troisième bord latéral (53) étant inférieur à un périmètre du quatrième bord latéral (54), la troisième face d'extrémité (23) comprenant un deuxième trou (231), et le premier trou traversant (11) reliant la première ouverture (1211) au deuxième trou (231) le long de la direction axiale de la partie tubulaire (1) ; et
une partie de bauge (4) circulaire comprenant une paroi de bague (41) circulaire reliée à la troisième face d'extrémité (23) et la première paroi (12), la partie de bauge (4) circulaire se trouvant à l'extérieur du premier trou traversant (11) dans la direction axiale de la partie tubulaire (1), la partie de bauge (4) circulaire comprenant un deuxième trou traversant (42) qui pénètre à travers la paroi de bague (41) circulaire dans la direction axiale de la partie tubulaire (1), le deuxième trou traversant (42) étant relié au premier trou traversant (11) et disposé de manière concentrique avec le premier trou traversant (11), la partie de bauge (4) circulaire ayant une épaisseur dans la direction radiale du premier trou traversant (11), et une épaisseur maximale de la partie de bauge (4) circulaire étant inférieure à une épaisseur minimale de la première paroi (12),
**caractérisé en ce qu'**un plan perpendiculaire à une direction axiale de la partie tubulaire (1) est défini comme premier plan, **en ce qu'**une projection de la partie de bride (2) sur le premier plan est une ellipse ou presque elliptique, **en ce qu'**une épaisseur de la première paroi (12) est T, et **en ce qu'**une longueur d'un axe court de l'ellipse n'est pas inférieure à une somme de 4T et d'un diamètre du premier trou traversant (11).

3. Connecteur (100) selon la revendication 2, dans lequel la paroi de bague (41) circulaire comprend une pluralité de deuxièmes parties saillantes (411) qui se trouve d'une extrémité de la partie de bague (41) circulaire éloignée de la partie de bride (2) et qui est disposée le long d'une direction circonférentielle du premier trou traversant (11).

4. Connecteur (100) selon la revendication 3, dans lequel un diamètre hydraulique du deuxième trou traversant (42) est inférieur à un diamètre hydraulique de la première ouverture (1211).

5. Connecteur (100) selon l'une quelconque des revendications 1 à 4, dans lequel au moins une section longitudinale de la partie de bride (2) comprend une face de bague de secteur, dans lequel la section longitudinale de la partie de bride (2) est parallèle à la direction axiale de la partie tubulaire (1), dans lequel la face de bague de secteur comprend au moins deux arcs de cercle, et dans lequel les deux arcs de cercle font saillie vers la première face d'extrémité (121) dans la direction axiale de la partie tubulaire (1).

6. Connecteur (100) selon l'une quelconque des revendications 1 à 4, dans lequel une longueur d'un axe long de l'ellipse est supérieure à deux fois le diamètre du premier trou traversant (11).

7. Connecteur (100) selon l'une quelconque des revendications 1 à 6, dans lequel la première paroi (12) comprend une partie de gradin (122) qui se trouve dans le premier trou traversant (11), dans lequel la partie de gradin (122) fait saillie de la première paroi (12) le long de la direction radiale du premier trou traversant (11) et s'étend le long d'une direction d'axe du premier trou traversant (11), et dans lequel le diamètre du premier trou traversant (11) à la partie de gradin (122) est inférieur au diamètre de la première ouverture (1211).

8. Connecteur (100) selon l'une quelconque des revendications 1 à 7, dans lequel une épaisseur de la première paroi (12) à une même hauteur dans la direction axiale de la partie tubulaire (1) est identique.

9. Connecteur (100) selon l'une quelconque des revendications 1 à 4, dans lequel au moins une section longitudinale de la partie de bride (2) comprend une face en croissant, dans lequel la section longitudinale de la partie de bride (2) est parallèle à la direction axiale de la partie tubulaire (1), dans lequel la face en croissant comprend au moins deux arcs de cercle, et dans lequel les deux arcs de cercle font saillie vers la première face d'extrémité (121) dans la direction axiale de la partie tubulaire (1).

10. Connecteur (100) selon la revendication 9, dans lequel une hauteur de la face en croissant augmente graduellement dans une direction à partir de positions très éloignées d'une ligne centrale de la partie tubulaire (1) vers la ligne centrale de la partie tubulaire (1).

11. Connecteur (100) selon l'une quelconque des revendications 1 à 10, dans lequel la pluralité de premières parties saillantes (3) est formée en extrudant un matériau d'une paroi intérieure de la partie tubulaire (1).

12. Connecteur (100) selon l'une quelconque des revendications 1 à 11, dans lequel la partie de bride (2) est formée en extrudant un matériau de la partie tubulaire (1).

13. Échangeur de chaleur, comprenant
un connecteur (100) selon l'une quelconque des revendications 1 à 12, un tube collecteur (200), dans lequel la pluralité de premières parties saillantes (3) ou une partie de bague (4) circulaire du connecteur (100) est insérée dans le tube collecteur (200), et dans lequel le connecteur (100) est relié au tube collecteur (200).

14. Échangeur de chaleur selon la revendication 13, dans lequel l'échangeur de chaleur est un échangeur de chaleur à microcanaux, et dans lequel chaque première partie saillante (3) ou la partie de bague (4) circulaire du connecteur (100) a une partie évasée, et dans lequel la partie évasée se trouve dans le tube collecteur (200).
